# EUROPÄISCHE PATENTSCHRIFT

(11) **EP 2 638 999 B1**
(45) Veröffentlichungstag und Bekanntmachung des Hinweises auf die Patenterteilung: **20.05.2015**
(21) Anmeldenummer: 12159357.8
(22) Anmeldetag: 14.03.2012
(51) Int. Cl.: B23D 57/00

(54) **Drahtsägeanordnung**
Wire saw assembly
Agencement de scie à fil

(43) Veröffentlichungstag der Anmeldung: 18.09.2013
(73) Patentinhaber: Siemens Aktiengesellschaft, 80333 München (DE)
(72) Erfinder: Budde, Thomas, 97078 Würzburg (DE); Fick, Michael, 97656 Sondernau (DE); Schneider, Wolfgang, 36037 Fulda (DE)

(56) Entgegenhaltungen:
- EP-A1- 0 733 429
- EP-A1- 2 546 014
- EP-A2- 0 788 858
- DE-A1- 19 729 578
- JP-A- 2000 117 614

## Beschreibung

Die vorliegende Erfindung betrifft eine Drahtsägeanordnung wie es im Anspruch 1 beansprucht wird, mit einem feststehenden Achsenelement, das an einer Halteeinrichtung gehalten ist, einem Walzenelement zum Bewegen eines Drahts, welches das Achsenelement zumindest bereichsweise umgibt, einem ersten Aktivteil einer elektrischen Maschine, das mit dem Achsenelement fest verbunden ist, und einem zweiten Aktivteil der elektrischen Maschine, das mit dem Walzenelement fest verbunden ist.

Eine solche Drahtsägeanordnung bzw. Drahtsägemaschine kann zum Schneiden von Siliziumblöcken bzw. Siliziumstäben verwendet werden, um Siliziumwafer herzustellen. Dabei wird ein entsprechender Draht durch das Walzenelement der Drahtsägeanordnung angetrieben. Auf die Oberfläche des Drahts wird eine entsprechende Suspension mit Schneidekörnern, die beispielsweise aus Diamant- oder Siliziumkarbidpartikeln gebildet sind, aufgebracht. Durch die Bewegung des Drahts werden die Schneidekörner durch den Sägespalt gezogen. Insbesondere bei der Herstellung von Siliziumwafern müssen die Toleranzen bezüglich der Abmessungen der Wafer genau eingehalten werden.

Bei Drahtsägemaschinen gemäß dem Stand der Technik werden üblicherweise U-förmige Halteeinrichtungen verwendet, bei denen das Achsenelement, um welches das Walzenelement rotiert, beidseitig eingespannt ist. Dabei können die elektrische Maschine und das Walzenelement als zwei separate Einheiten ausgebildet sein. Die Lager des Walzenelements befinden sich dabei in den beiden Teilen der Halteeinrichtung bzw. der beiden Lagerböcke des Maschinenbetts.

Darüber hinaus sind Drahtsägeanordnungen bekannt, bei denen der Antrieb in Form der elektrischen Maschine und das Walzenelement in einer gemeinsamen Anordnung integriert sind. Im Betrieb der elektrischen Maschine erwärmt sich diese üblicherweise. Daher ergibt sich das Problem, dass sich die von der elektrischen Maschine erzeugte Wärme auf die Lagereinrichtung, mittels welcher das Walzenelement bezüglich des Achsenelements gelagert ist und das Walzenelement selbst übertragt. Die Erwärmung der Lagereinrichtung und des Walzenelements kann zu einer Verschiebung des Drahts bzw. des Drahtfelds führen, das auf dem Walzenelement angeordnet ist. Somit können die benötigten Toleranzen beim Schneidevorgang nicht mehr gewährleistet werden.

Die DE 197 29 578 A1 beschreibt eine Drahtsäge mit drehbar gelagerten Drahtführungsrollen, um die ein Sägedraht gewickelt ist. Des Weiteren weist die Drahtsäge mindestens einen Antrieb auf, durch den die Drahtführungsrollen in Rotation versetzt werden. Die Drahtführungsrollen sind auf einem langgestreckten Träger abgestützt, der an einem freien Ende mit einem Maschinenrahmen verbunden ist und der ein gegenüberliegendes, freischwebendes Ende aufweist.

In der den Oberbegriff von Anspruch 1 beschreibenden EP 2 546 014 A1 ist eine Vorrichtung zum Antrieb eines Drahtes oder drahtähnliche Objekte beschrieben, wobei die Vorrichtung ein Achsenelement, das an eine Halteeinrichtung gehalten ist, ein Walzelement zum Bewegen des Drahtes, einen Stator und einen Rotor einer elektrischen Maschine umfasst. Dabei ist der Rotor mit dem Walzelement und der Stator mit dem Achsenelement verbunden.

Es ist Aufgabe der vorliegenden Erfindung, eine Drahtsägeanordnung der eingangs genannten Art bereitzustellen, die eine einfache Handhabung gewährleistet und die zudem einen zuverlässigen Betrieb ermöglicht.

Diese Aufgabe wird durch eine Drahtsägeanordnung gemäß Patentanspruch 1 gelöst. Vorteilhafte Weiterbildungen der vorliegenden Erfindung sind in den Unteransprüchen angegeben.

Die erfindungsgemäße Drahtsägeanordnung umfasst ein feststehendes Achsenelement, das an einer Halteeinrichtung gehalten ist, ein Walzenelement zum Bewegen eines Drahts, welches das Achsenelement zumindest bereichsweise umgibt, ein erstes Aktivteil einer elektrischen Maschine, das mit dem Achsenelement fest verbunden ist, und ein zweites Aktivteil der elektrischen Maschine, das mit dem Walzenelement fest verbunden ist, wobei das Achsenelement nur einseitig an der Halteeinrichtung gehalten ist und wobei das erste Aktivteil in radialer Richtung des Achsenelements außenliegend zu dem Walzenelement angeordnet ist.

Das Achsenelement weist zumindest einen Kanal auf, der mit einer Lagereinrichtung fluidisch verbunden ist und der zum Schmieren der Lagereinrichtung mit einem Ölkreislauf der Drahtsägeanordnung verbunden ist. Bei Drahtsägen werden neben den hohen Querkräften auch hohe Drehzahlen verlangt. So kommen Lagerungen mit Fettschmierungen schnell an ihre thermischen Grenzen, obwohl deren Tragfähigkeit ausreichend ist. Daher kann eine entsprechende Konstruktion mit einer Ölumlaufschmierung insbesondere bei der einseitig angespannten Ausgestaltung der Drahtsägeanordnung vorteilhaft sein. Dazu können in der Lagereinrichtung entsprechende Kanäle für einen Ölkreislauf vorhanden sein, die derart ausgebildet sind, was ein Gefälle zwischen den Ölkanal an der Lagereinrichtung und einen Ölablauf im Bereich der Aktivteile vorliegt. Durch eine entsprechende Ölschmierung der Lagereinrichtung kann ein optimaler Wärmeabtransport gewährleistet werden.

Der Kanal und der Ölkreislauf sind hermetisch abgeschlossen ausgebildet. Durch eine derartige Ausgestaltung kann der Ölkreislauf vor dem Eindringen von Verunreinigungen geschützt werden, die die Lagereinrichtung beschädigen könnten. So kann beispielsweise verhindert werden, dass die Suspension und die Schneidkörner, die zum Sägen verwendet werden, in den Ölkreislauf eindringen können. In gleicher Weise kann verhindert werden, dass sich das Öl aus dem Ölkreislauf mit der Suspension, die zum Sägen verwendet wird, vermischt.

Die Halteeinrichtung der Drahtsägeanordnung kann dabei bevorzugt eine L-förmige Querschnittsfläche aufweisen. Das Achsenelement wird nur einseitig durch die Halteeinrichtung bzw. den Lagerbock gehalten bzw. ist nur einseitig eingespannt. Dabei ist an dem Achsenelement ein erstes Aktivteil einer elektrischen Maschine mechanisch fest angeordnet und an dem Walzenelement ist das zweite Aktivteil der elektrischen Maschine mechanisch fest angeordnet. Das Walzenelement weist im Wesentlichen eine Form eines Hohlzylinders auf, wobei das Achsenelement in dem Innenraum des Walzenelements zumindest bereichsweise angeordnet ist. Durch die einseitige Einspannung des Achsenelements und durch die L-förmige Ausgestaltung des Halteelements kann ein einfacherer Zugang für Portalroboter gewährleistet werden, wodurch der Automatisierungsgrad erhöht werden kann. Des Weiteren ist ein leichterer und schnellerer Wechsel der gesamten Anordnung mit dem Walzenelement und der elektrischen Maschine im Fehlerfall möglich. Zudem kann insgesamt eine kompaktere Bauweise der Drahtsägeanordnung erreicht werden. Außerdem kann der Wechsel von entsprechenden Hülsen, die an der Außenfläche des Walzenelements angeordnet werden können, durch die einseitig offene Gestaltung der Drahtsägeanordnung erleichtert werden.

Zudem ist das erste Aktivteil in radialer Richtung des Achsenelements außenliegend zu dem Walzenelement angeordnet. Dabei kann ein Stator der elektrischen Maschine in radialer Richtung außenliegend zu dem Walzenelement angeordnet sein. Der Rotor kann an der Außenfläche des Walzenelements befestigt sein. Somit ergibt sich eine elektrische Maschine nach Art eines Innenläufers zum Antrieb des Walzenelements. Diese Anordnung weist den Vorteil auf, dass das Achsenelement in einem der Halteeinrichtung zugeordneten Bereich mit einem größeren Durchmesser ausgebildet sein kann. Somit kann die mechanische Steifigkeit des Achsenelements zusätzlich erhöht werden.

In einer bevorzugten Ausführungsform ist das Walzenelement mit einer Lagereinrichtung in dem Achsenelement drehbar gelagert und die Lagereinrichtung ist in axialer Richtung des Achsenelements zu dem ersten und zweiten Aktivteil beabstandet angeordnet. Durch diese Anordnung ergibt sich eine räumliche Trennung der elektrischen Maschine und der Lagereinrichtung der Drahtsägeanordnung. Durch die räumliche Abgrenzung kann verhindert werden, dass die im Betrieb der elektrischen Maschine erzeugte Wärme auf die Lagereinrichtung und/oder das Walzenelement übertragen wird. Somit kann eine Verschiebung des Drahts bzw. des Drahtfelds durch thermische Längenausdehnung des Walzenelements oder der Lagereinrichtung vermieden werden.

Des Weiteren kann durch die oben beschriebene Ausgestaltung der Drahtsägeanordnung eine hohe mechanische Steifigkeit erreicht werden. Dabei kann das Walzenelement unabhängig von der Dimensionierung der elektrischen Maschine gestaltet werden. Zudem kann das Verhältnis von Länge zu Durchmesser des Walzenelements frei gestaltet werden.

Bevorzugt umfasst die Lagereinrichtung zumindest ein Zylinderrollenlager zur radialen Lagerung des Walzenelements zu dem Achsenelement. Infolge der großen radialen Querkräfte und der hohen Drehzahlen in Betrieb der Drahtsägeanordnung bedarf es einer entsprechenden Lagereinrichtung. Dazu können bevorzugt Zylinderrollenlager, welche auch paarig angeordnet werden können, verwendet werden. Dabei ist die Verwendung von Zylinderrollenlagern einer kleineren Reihe vorteilhaft, da somit das Walzenelement und das Achsenelement massiver ausgeführt werden können. Bevorzugt sollen solche Zylinderrollenlager verwendet werden, bei denen das Verhältnis von Innenringdurchmesser zu Außenringdurchmesser möglichst hoch ist. Somit kann ein Achsenelement mit einem möglichst großen Durchmesser bereitgestellt werden, wodurch die Steifigkeit des Achsenelements erhöht wird.

In einer weiteren Ausführungsform umfasst die Lagereinrichtung zumindest ein Spindellager und/oder ein Schrägkugellager zur axialen Lagerung des Walzenelements zu dem Achsenelement. Um eine entsprechende axiale Lagerung des Walzenelements bezüglich des Achsenelements zu gewährleisten, können entsprechende Spindel- oder Schrägkugellager verwendet werden. Dabei kann eine Anstellung der Spindellager mittels einer entsprechenden Spiralfeder erreicht werden. Des Weiteren können die Spindellager und in dem Innenring radial freigeschnitten sein, damit eine entsprechende axiale Lagerung ermöglicht werden kann. Auf diese Weise kann eine möglichst präzise Führung des Walzenelements erreicht werden.

In einer weiteren Ausgestaltung umfasst das Achsenelement einen Innenring der Lagereinrichtung. Das Achsenelement bzw. der Dorn kann derart ausgebildet sein, das ein Innenring des Lagers, insbesondere des Zylinderrolllagers, integriert ist. Zu diesem Zweck kann die Außenkontur des Achsenelements durch mechanische Bearbeitung entsprechend angepasst werden. Integration des Innenrings in das Achsenelement erleichtert die Montage und zusätzlich kann.die mechanische Steifigkeit erhöht werden.

In einer weiteren Ausführungsform umfasst die Drahtsägeanordnung eine Heizeinrichtung zum Erwärmen des Öls. Durch ein Vorheizen des Öls kann das System schon vor Beginn des Schneidprozesses auf Arbeitstemperatur gebracht werden. Um eine thermische Ausdehnung zu vermeiden, kann die Drahtsägemaschine schon vor Beginn des Schneidevorgangs in einen erwärmten Zustand gebracht werden, auf den sie während des Schneideprozesses stabil gehalten wird. Dies wird mit einer entsprechenden Heizeinrichtung realisiert, wie ein Vorheizen des Öls bereits im Stillstand der Drahtsägemaschine erlaubt. Des Weiteren ist mit der Ölschmierung eine sehr hohe Belastung der Lager möglich und ein Nachschmieren der Lager von Hand entfällt.

Die vorliegende Erfindung wird nun anhand der beigefügten Zeichnungen näher erläutert. Dabei zeigen:
- FIG 1: eine Drahtsägeanordnung gemäß dem Stand der Technik in einer geschnittenen Seitenansicht;
- FIG 2: eine Drahtsägeanordnung gemäß dem Stand der Technik in einer geschnittenen Seitenansicht ohne Halteeinrichtung;
- FIG 3: die erfindungsgemäße Drahtsägeanordnung in einer geschnittenen Seitenansicht;
- FIG 4: eine Drahtsägeanordnung gemäß FIG 3 ohne Halteeineiner weiteren Ausführungsform;
- FIG 5: richtung in die erfindungsgemäße Drahtsägeanordnung gemäß FIG 3 ohne Halteeinrichtung;
- FIG 6: eine Detailansicht der Lagereinrichtung der Drahtsägeanordnung; und
- FIG 7: eine Detailansicht des Ölkreislaufs der Drahtsägeanordnung.

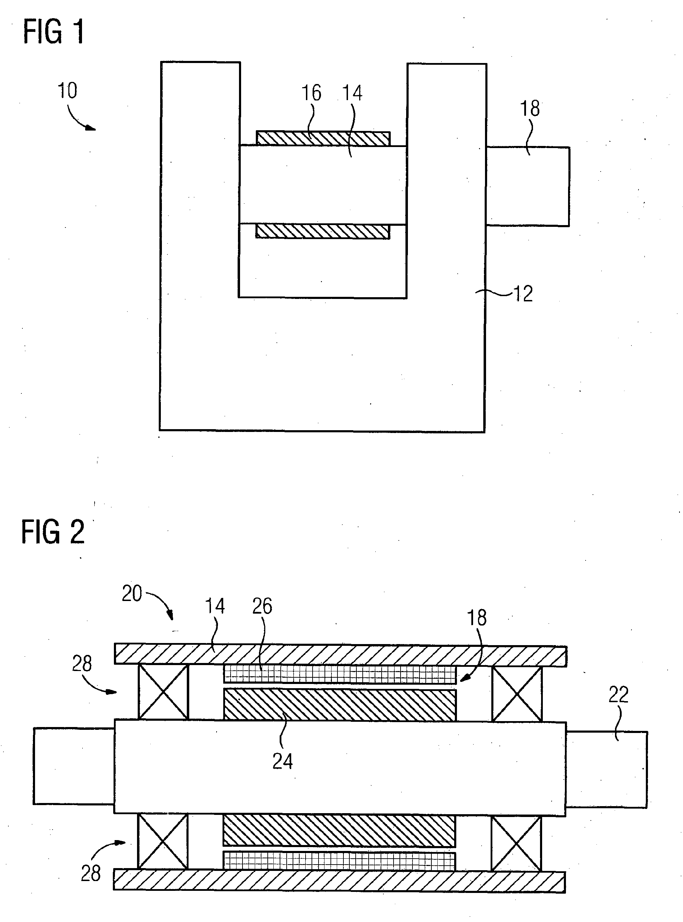

Die Ausführungsformen, die in den FIG 1, 2 und 4 gezeigt sind, sind nicht Teil der vorliegenden Erfindung, sondern dienen zum besseren Verständnis der Erfindung.

FIG 1 zeigt eine Drahtsägeanordnung 10 gemäß dem Stand der Technik in einer geschnittenen Seitenansicht. Die Drahtsägeanordnung 10 umfasst eine Halteeinrichtung 12, die in der Seitenansicht eine im Wesentlichen U-förmige Gestalt aufweist. Dabei ist das Walzenelement 14 in dem Zwischenraum der beiden Lagerböcke der Halteeinrichtung 12 angeordnet. An der Außenfläche des Walzenelements 14 ist eine Hülse 16 angeordnet. Auf der Außenfläche der Hülse 16 kann der Draht, der beispielsweise zum Sägen von Halbleiterstäben oder Halbleiterblöcken eingesetzt wird, positioniert werden. Auf der dem Walzenelement 14 gegenüberliegenden Seite des rechten Lagerbocks der Halteeinrichtung 12 ist eine elektrische Maschine 18 angeordnet. Die elektrische Maschine 18 dient dem Antrieb des Walzenelements 14.

FIG 2 zeigt eine Antriebsanordnung 20 für eine Drahtsägeanordnung 10 gemäß dem Stand der Technik in einer geschnittenen Seitenansicht. Die Antriebseinrichtung 20 umfasst ein Achsenelement 22, das dazu ausgebildet ist, in eine Halteeinrichtung 12 gemäß FIG 1 eingespannt zu werden. Bei der Antriebsanordnung 20 ist die elektrische Maschine 18 in dem Innenraum des Walzenelements 14 angeordnet. Die elektrische Maschine 18 umfasst ein erstes Aktivteil 24 in Form eines Stators, das mechanisch fest mit dem Achsenelement 22 verbunden ist. Darüber hinaus umfasst die elektrische Maschine 18 ein zweites Aktivteil 26 in Form eines Rotors, das mechanisch fest mit dem Walzenelement 14 verbunden ist. Zwischen dem Achsenelement 22 und dem Walzenelement 14 ist eine Lagereinrichtung 28 in Form von entsprechenden Kugellagern angeordnet. Im Betrieb der elektrischen Maschine 18 erwärmt sich diese üblicherweise. Dies kann zu einer thermischen Ausdehnung des Walzenelements 14 führen, was wiederum eine Verschiebung des Drahts auf der Außenfläche des Walzenelements mit sich bringen kann.

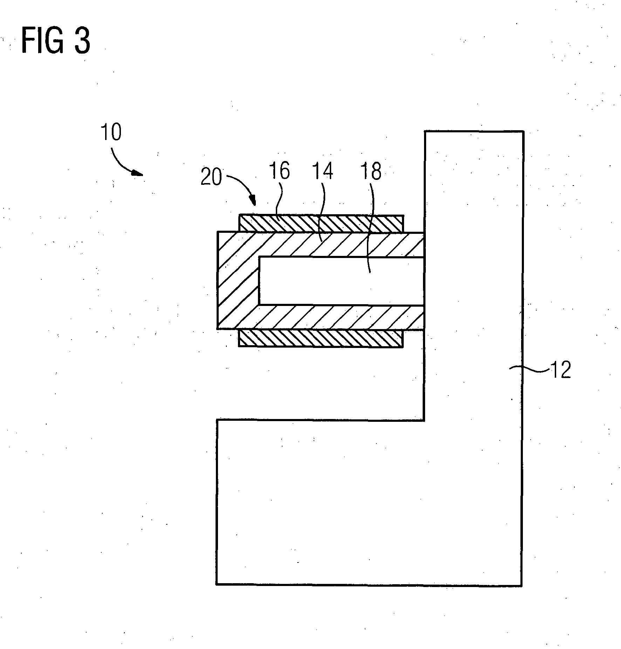

FIG 3 zeigt eine erfindungsgemäße Drahtsägeanordnung 10 in einer geschnittenen Seitenansicht. Bei dieser Drahtsägeanordnung 10 ist die Halteeinrichtung 14 derart ausgebildet, dass sie in der Seitenansicht im Wesentlichen ein L-förmiges Profil aufweist. Das hier nicht dargestellte Achsenelement 22 ist in diesem Fall nur einseitig an der Halteeinrichtung 12 befestigt. Die elektrische Maschine 18 ist dabei in dem Innenraum des Walzenelements 14 angeordnet. An der Außenfläche des Walzenelements 14 ist eine Hülse 16 angeordnet. Durch die einseitige Befestigung der Antriebseinrichtung 20 an der Halteeinrichtung 12 kann ein leichterer Zugang und ein schnellerer Wechsel der einzelnen Komponenten der Drahtsägeanordnung 10 ermöglicht werden.

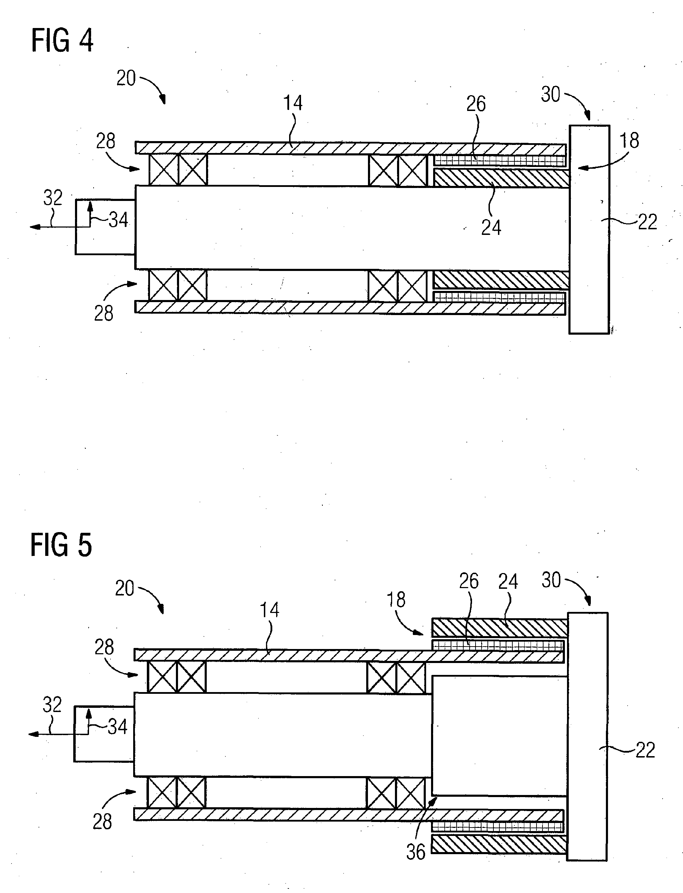

FIG 4 zeigt eine nicht Teil der vorliegenden Erfindung seinde Antriebsanordnung 20 für eine Drahtsägeanordnung 10 in einer geschnittenen Seitenansicht. Dabei weist das Achsenelement 22 an der der Halteeinrichtung 12 zugewandten Seite einen größeren Durchmesser auf. Somit kann die mechanische Festigkeit des Achsenelements 22 erhöht werden. Zudem kann die mechanische Festigkeit der Verbindung zwischen dem Achsenelement 22 und der Halteeinrichtung 12 erhöht werden. Die Lagereinrichtung 28, die vorliegend durch zwei paarig angeordnete Zylinderrollenlager bereitgestellt werden kann, ist in axialer Richtung 32 des Achsenelements 22 zu dem ersten Aktivteil 24 und dem zweiten Aktivteil 26 der elektrischen Maschine 18 beabstandet angeordnet. Durch die räumliche Trennung der Lagereinrichtung 28 und der elektrischen Maschine 18 kann verhindert werden, dass die in Betrieb der elektrischen Maschine 18 entstehende Wärme auf die Lagereinrichtung 28 übertragen wird. Somit kann eine thermische Ausdehnung der Lagereinrichtung 28 und des Walzenelements 24 verhindert werden. In der hier dargestellten Ausführungsform ist das erste Aktivteil 24, das als Stator ausgebildet ist, mit dem Achsenelement 22 drehfest verbunden. Das zweite Aktivteil 26 der elektrischen Maschine 18, das als Rotor ausgebildet ist, ist drehfest mit dem Walzenelement 14 verbunden. Somit wird eine elektrische Maschine 18 in Form eines Außenläufers bereitgestellt. Die elektrische Maschine 18 kann dabei als Asynchron- oder Synchronmaschine ausgebildet sein.

FIG 5 zeigt eine weitere Antriebsanordnung 20 für eine Drahtsägeanordnung 10 in einer geschnittenen Seitenansicht. Dabei ist das erste Aktivteil 24 der elektrischen Maschine 18 in radialer Richtung 34 des Achsenelements 22 zwischenseitig zu dem Walzenelement 14 angeordnet. Das zweite Aktivteil 26 ist dabei im Bereich der Außenfläche des Walzenelements 14 angeordnet. Die elektrische Maschine 18 ist im vorliegenden Ausführungsbeispiel als Innenläufer ausgebildet. Diese Anordnung ermöglicht, dass das Achsenelement 22 in einem Bereich 36 einen größeren Durchmesser aufweisen kann. Durch den erhöhten Durchmesser des Achsenelements 22 kann die mechanische Festigkeit des Achsenelements 22 zusätzlich erhöht werden.

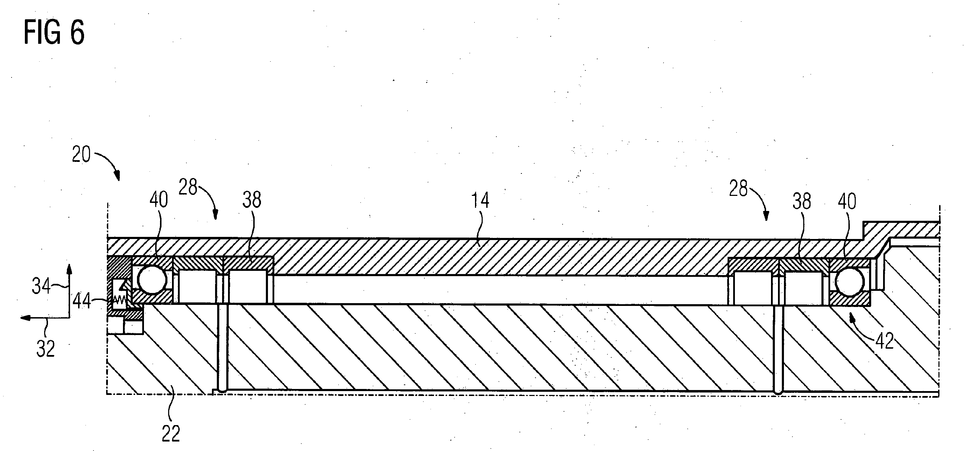

FIG 6 zeigt eine Detailansicht der Lagereinrichtung 28 der Antriebsanordnung 20. Vorliegend umfasst die Lagereinrichtung 28 zwei jeweils paarweise angeordnete Zylinderrollenlager 38. Die Zylinderrollenlager 38 dienen der radialen Lagerung des Walzenelements 14 bezüglich des Achsenelements 22. Zusätzlich umfasst die Lagereinrichtung 28 entsprechende Spindellager 40. Die Spindellager 40 weisen unter dem Innenring in radialer Richtung 34 des Achsenelements 22 einen Freischnitt 42 auf. Durch den Freischnitt 42 wird eine axiale Lagerung des Walzenelements 14 zu dem Achsenelement 22 ermöglicht. Zudem ist eine Spiralfeder 44 zur Anstellung der Spindellager 40 vorgesehen.

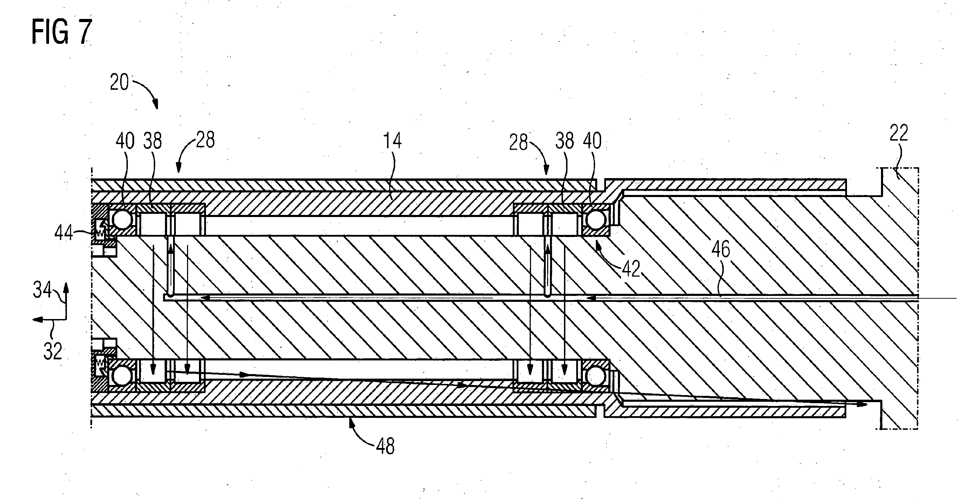

FIG 7 zeigt die Antriebsanordnung 20 in einer weiteren Detailansicht. Dabei ist zu erkennen, dass in dem Achsenelement 22 ein Kanal 46 angeordnet ist. Der Kanal 46 weist eine Erstreckung in axialer Richtung 32 des Achsenelements 22 auf. Zudem weist der Kanal 46 entsprechende Abzweigungen in radialer Richtung 34 des Achsenelements 32 auf, mittels welchen eine Fluidverbindung zwischen dem Kanal 46 und der Lagereinrichtung 28 bereitgestellt wird. Somit kann eine entsprechende Ölschmierung der Lagereinrichtungen 28 ermöglicht werden. Durch die Bewegung der Lagereinrichtungen wird das Öl an die jeweilige Unterseite der Lagereinrichtung 28 transportiert. An den Unterseiten der Lagereinrichtung 28 ist ein entsprechender Ölsumpf 48 angeordnet. Der Ölsumpf 48 ist derart ausgebildet, dass er in axialer Richtung 32 des Achsenelements 22 ein Gefälle aufweist. Die Richtung des Ölflusses ist in FIG 7 durch die entsprechenden Pfeile verdeutlicht. Durch die Ausbildung des Ölssumpfs 48 mit dem Gefälle fließt das Öl ohne zusätzliche Druckbeaufschlagung ab. Der Ölkreislauf kann zusätzlich mit einer hier nicht dargestellten Heizeinrichtung zum Erwärmen des Öls verbunden sein. Somit kann das Öl bereits im Stillstand der elektrischen Maschine 18 auf Betriebstemperatur gebracht werden.

## Patentansprüche

1. Drahtsägeanordnung (10) mit
- einem feststehenden Achsenelement (22), das an einer Halteeinrichtung (12) gehalten ist,
- einem Walzenelement (14) zum Bewegen eines Drahts, welches das Achsenelement (22) zumindest bereichsweise umgibt,
- einem ersten Aktivteil (24) einer elektrischen Maschine (18), das mit dem Achsenelement (22) fest verbunden ist, und
- einem zweiten Aktivteil (26) der elektrischen Maschine (18), das mit dem Walzenelement (14) fest verbunden ist, wobei
- das Achsenelement (22) nur einseitig an der Halteeinrichtung (12) gehalten ist,
- das erste Aktivteil (24) in radialer Richtung (34) des Achsenelements (22) außenliegend zu dem Walzenelement (14) angeordnet ist,
**dadurch gekennzeichnet, dass**
- das Achsenelement (22) zumindest einen Kanal (46) aufweist, der mit einer Lagereinrichtung (28) fluidisch verbunden ist und der zum Schmieren der Lagereinrichtung (28) mit einem Ölkreislauf der Drahtsägeanordnung verbunden ist; und
- der Kanal (46) und der Ölkreislauf hermetisch abgeschlossen ausgebildet sind.

2. Drahtsägeanordnung (10) nach Anspruch 1, **dadurch gekennzeichnet, dass** das Walzenelement (14) mit der Lagereinrichtung (28) an dem Achsenelement (22) drehbar gelagert ist und die Lagereinrichtung (28) in axialer Richtung (32) des Achsenelements (22) zu dem ersten und zweiten Aktivteil (24,26) beabstandet angeordnet ist.

3. Drahtsägeanordnung (10) nach Anspruch 2, **dadurch gekennzeichnet, dass** die Lagereinrichtung (28) zumindest ein Zylinderrollenlager (38) zur radialen Lagerung des Walzenelements (14) zu dem Achsenelement (22) umfasst.

4. Drahtsägeanordnung (10) nach Anspruch 2 oder 3, **dadurch gekennzeichnet, dass** die Lagereinrichtung (28) zumindest ein Spindellager (40) und/oder ein Schrägkugellager zur axialen Lagerung des Walzenelements (14) zu dem Achsenelement (22) umfasst.

5. Drahtsägeanordnung (10) nach Anspruch 2, 3 oder 4, **dadurch gekennzeichnet, dass** das Achsenelement (22) einen Innenring der Lagereinrichtung (28) umfasst.

6. Drahtsägeanordnung (10) nach einem der vorhergehenden Ansprüche , **dadurch gekennzeichnet, dass** die Drahtsägeanordnung (10) eine Heizeinrichtung zum Erwärmen des Öls umfasst.

## Claims

1. Wire saw assembly (10) having
- a stationary axle element (22) which is held on a holding facility (12),
- a rolling element (14), which at least partially surrounds the axle element (22), for moving a wire,
- a first active part (24) of an electric machine (18), which is securely connected to the axle element (22), and
- a second active part (26) of the electric machine (18), which is securely connected to the rolling element (14), wherein
- the axle element (22) is only held on the holding facility (12) on one side,
- the first active part (24), in the radial direction (34) of the axle element (22), is arranged so as to be external in relation to the rolling element (14),
**characterised in that**
- the axle element (22) has at least one channel (46) which is fluidically connected to a bearing facility (28) and which is connected to an oil circuit of the wire saw assembly for lubricating the bearing facility (28); and
- the channel (46) and the oil circuit are embodied so as to be hermetically closed.

2. Wire saw assembly (10) according to claim 1, **characterised in that** the rolling element (14) is rotatably mounted on the axle element (22) with the bearing facility (28) and the bearing facility (28) is arranged at a distance from the first and second active part (24, 26) in the axial direction (32) of the axle element (22).

3. Wire saw assembly (10) according to claim 2, **characterised in that** the bearing facility (28) comprises at least one cylindrical roller bearing (38) for radial support of the rolling element (14) in relation to the axle element (22) .

4. Wire saw assembly (10) according to claim 2 or 3, **characterised in that** the bearing facility (28) comprises at least one spindle bearing (40) and/or an angular-contact ball bearing for axial support of the rolling element (14) in relation to the axle element (22).

5. Wire saw assembly (10) according to claim 2, 3 or 4, **characterised in that** the axle element (22) comprises an inner ring of the bearing facility (28).

6. Wire saw assembly (10) according to one of the preceding claims, **characterised in that** the wire saw assembly (10) comprises a heating facility for heating up the oil.

## Revendications

1. Agencement ( 10 ) de scie à fil comprenant
- un élément ( 22 ) fixe formant axe, qui est maintenu à un dispositif ( 12 ) de maintien,
- un élément ( 14 ) formant cylindre pour le déplacement d'un fil, cet élément entourant l'élément ( 22 ) formant axe au moins par endroits,
- une première partie ( 24 ) active d'un moteur ( 18 ) électrique, qui est reliée fixement à l'élément ( 22 ) formant axe et
- une deuxième partie ( 26 ) active du moteur ( 18 ) électrique, qui est reliée fixement à l'élément ( 14 ) formant cylindre,
dans lequel
- l'élément ( 22 ) formant axe n'est maintenu que d'un côté au dispositif ( 12 ) de maintien,
- la première partie ( 24 ) active est disposée, dans la direction ( 34 ) radiale de l'élément ( 22 ) formant axe, en se trouvant à l'extérieur par rapport à l'élément ( 14 ) formant cylindre,
**caractérisé en ce que**
- l'élément ( 22 ) formant axe a au moins un canal ( 46 ), qui communique fluidiquement avec un dispositif ( 28 ) de palier et qui, pour la lubrification du dispositif ( 28 ) formant palier, communique avec un circuit d'huile de l'agencement de scie à fil et
- le canal ( 46 ) et le circuit d'huile sont constitués de manière à être fermés hermétiquement.

2. Agencement ( 10 ) de scie à fil suivant la revendication 1, **caractérisé en ce que** l'élément ( 14 ) formant cylindre est monté tournant avec le dispositif ( 28 ) de palier sur l'élément ( 22 ) formant axe et le dispositif ( 28 ) de palier est disposé, dans la direction ( 32 ) axiale de l'élément ( 22 ) formant axe, en étant à distance de la première et de la deuxième parties ( 24, 26 ) actives.

3. Agencement ( 10 ) de scie à fil suivant la revendication 2, **caractérisé en ce que** le dispositif ( 28 ) de palier comprend au moins un roulement ( 38 ) à rouleaux cylindriques pour supporter radialement l'élément ( 14 ) formant cylindre par rapport à l'élément ( 22 ) formant axe.

4. Agencement ( 10 ) de scie à fil suivant la revendication 2 ou 3, **caractérisé en ce que** le dispositif ( 28 ) de palier comprend au moins un palier ( 40 ) à broche et/ou un roulement à billes oblique pour supporter axialement l'élément ( 14 ) formant cylindre par rapport à l'élément ( 22 ) formant axe.

5. Agencement ( 10 ) de scie à fil suivant la revendication 2, 3 ou 4, **caractérisé en ce que** l'élément ( 22 ) formant axe comprend une bague intérieure du dispositif ( 28 ) de palier.

6. Agencement ( 10 ) de scie à fil suivant l'une des revendications précédentes, **caractérisé en ce que** l'agencement ( 10 ) de scie à fil comprend un dispositif de chauffage pour réchauffer l'huile.
